(19) Europäisches Patentamt
European Patent Office
Office européen des brevets

(11) Numéro de publication: **0 191 260**
**B1**

(12) **FASCICULE DE BREVET EUROPÉEN**

(45) Date de publication du fascicule du brevet: **31.05.89**

(51) Int. Cl.4: **C 07 F 7/18**, C 07 F 7/08

(21) Numéro de dépôt: **85402619.2**

(22) Date de dépôt: **24.12.85**

(54) **Complexes de silicium pentacoordinés, leur procédé de préparation et leur application à la préparation d'organosilanes.**

(30) Priorité: **27.12.84 FR 8419885**

(43) Date de publication de la demande:
**20.08.86 Bulletin 86/34**

(45) Mention de la délivrance du brevet:
**31.05.89 Bulletin 89/22**

(84) Etats contractants désignés:
**AT BE CH DE GB IT LI LU NL SE**

(56) Documents cité:
**EP-A-0 188 967**
**FR-A-1 433 678**

**CEHMICAL ABSTRACTS, vol. 70, no.13, 31 mars 1969, page 20, no. 58530j, Columbus, Ohio, US**

(73) Titulaire: **CENTRE NATIONAL DE LA RECHERCHE SCIENTIFIQUE (CNRS), 15, Quai Anatole France, F-75007 Paris (FR)**

(72) Inventeur: **Corriu, Robert, 246, rue de l'Espérou, F-34100 Montpellier (FR)**
Inventeur: **Cerveau, Geneviève, Clos St Joseph- C, 749 Avenue du Pic Saint Loup, F-34100 Montpellier (FR)**
Inventeur: **Chuit, Claude, Route de Saunière, F-30250 Junas (FR)**
Inventeur: **Reye, Catherine, Résidence Le Bussy d'Amboise 160 Rue d'Alco, F-34000 Montpellier (FR)**

(74) Mandataire: **Warcoin, Jacques, Cabinet Régimbeau 26, avenue Kléber, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 191 260 B1

LIBER, STOCKHOLM 1989

**Description**

La présente invention concerne de nouveaux complexes du silicium pentacoordinés, sinsi que leur procédé de préparation.

Les complexes de silicium pentacoordinés selon l'invention répondent à la formule générale I:

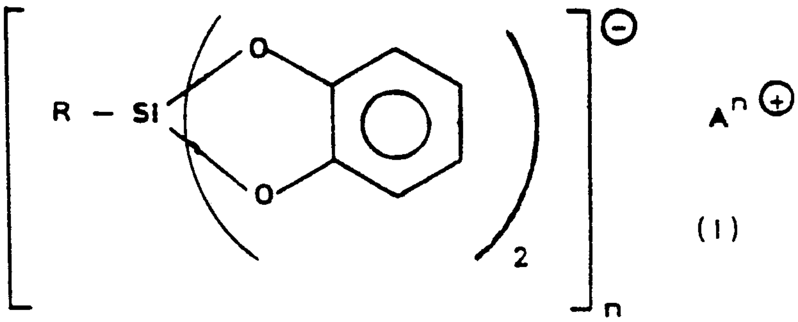

(I)

dans laquelle:

R désigne un radical alcoyle, alcényle, alcynyle, phényle, naphtyle, phénylalcoyle, naphtylalcoyle, phénylalcényle, naphtylalcényle, phénylalcynyle, naphtylalcynyle, alcoylphényle ou alcoylnaphtyle, dans lesquels les fragments aliphatiques sont linéaires ou ramifiés et contiennent de 1 à 20 atomes de carbone,

A représente un metal alcalin ou alcalino-térreux, à la condition toutefois que A ne représente pas le sodium, le potassium, le baryum, le rubidium ou le magnesium, lorsque R est un radical phényle, et

n = 1 ou 2.

Conformément à la présente invention, ces complexes de formule générale I sont obtenus en faisant réagir un dérivé de silicium de formule générale II:

R - Si Y (II)

dans laquelle:

R a la signification donnée à la revendication 1, et

Y représente un groupement trialcoxy en $C_1$ à $C_6$, trihalogéno, dialcoxyhydrogéno en $C_1$ à $C_6$ ou dihalogénohydrogéno,

avec du pyrocatéchol en présence d'une base constituée par un alcoolate de métal alcalin ou alcalino-terreux, notamment prépare in situ dans le milieu réactionnel.

Les produits de départ de formule générale II peuvent être préparés selon des procédés classiques décrits par exemple dans "Chemistry and Technology of Silicones" (W.Noll).

A titre de base nécessaire pour la mise en oeuvre du procédé ci-dessus, on utilisera avantageusement un alcoolate de métal alcalin ou alcalino-terreux, par exemple du méthylate de sodium, ce dernier pouvant notamment être préparé in situ dans le milieu réactionnel.

De façon générale, la réaction entre le dérivé de silicium de formule (II) R-Si Y et le pyrocatéchol, est menée dans un milieu solvant anhydre, notamment un milieu alcoolique, tel que le méthanol, et sous une atmosphère inerte en particulier une atmosphère d'azote.

La présente invention se rapporte également à l'application des complexes de formule I à la préparation d'organosilanes qui sont des composés susceptibles de nombreuses applications industrielles.

Habituellement, les organosilanes sont préparés par chauffage du silicium élémentaire avec un halogénure d'alcoyle ou d'aryle en présence d'un catalyseur à base de cuivre.

Une telle réaction présente l'inconvénient de conduire le plus souvent à des mélanges de divers produits. C'est ainsi que la réaction du silicium sur le chlorure de methyle donne naissance à un mélange de méthylchlorosilanes conformément au schema réactionnel suivant:

$$CH_3Cl + Si \xrightarrow[300°C]{Cu(10\%)} SiCl_4 + CH_3SiHCl_2 + CH_3SiCl_3 + (CH_3)_2SiCl_2$$

En outre, un tel mode de préparation ne permet pas l'obtention directe d'organosilanes mixtes comportant des groupements organiques différents.

L'état de la technique le plus proche connu, peut être illustré par US-A-3 360 525 qui se rapporte à une famille très générale de complexes de silicium pentacoordinés, au sein de laquelle, seul le bis(benzène diolato-1,2)-phénylsilicate de sodium se trouve décrit. Ces complexes sont toutefois présentés avec une autre application, puisqu'ils seraient directement utiles en tant que catalyseurs ou agents de vulcanisation pour différents matériaux de moulage, tels que les résines époxy et les caoutchoucs de silicone.

Par ailleurs Chemical Abstracts, vol. 70, n° 13 du 31 mars 1969, page 20, n° 58530j et le brevet ZA-A-6 704 907 mentionnent un procédé de traitement de polydimeéthylsiloxane utilisant à titre de catalyseur de polymérisation des complexes de silicium pentacoordinés. Ces documents visent essentiellement des complexes contenant un cation aminé. On y trouve cependant une référence au complexe pentacoordiné contenant le cation potassium.

Conformément à la présente invention, tous les complexes de formule générale I sont utilisés sans restriction comme produits de départ utiles à la préparation d'organosilanes de formule III:

$$R\ R'\ R''\ Si\ R''' \qquad (III)$$

dans laquelle:

R a la signification donnée précédemment,
R' désigne un radical R,
R'' et R''' désignent un atome d'hydrogène ou un radical R,
R' et R'''' pouvant en outre former un cycle avec l'atome de silicium.

Ces organosilanes de formule III sont préparés par réaction desdits complexes de formule I, sans aucune restriction, avec des dérivés organométalliques.

Les organosilanes de formule III obtenus selon l'invention sont connus pour la plupart. Ils sont essentiellement utilisés dans l'industrie des silicones comme agents réticulants et additifs à des compositions catalytiques, ou encore dans l'industrie pharmaceutique. Jusqu'à présent, ils étaient préparés à partir de produits de départ résultant de la synthèse directe précédemment évoquée, par des procédés nécessitant de nombreuses étapes réactionnelles.

En revanche, la présente invention offre une nouvelle voie de synthèse d'organosilanes, ne nécessitant plus que deux étapes réactionnelles, et permettant d'obtenir avec d'excellents rendements des produits très purs. Ce mode de préparation permet en outre d'atteindre rapidement les organosilanes mixtes les plus divers.

Les dérivés organométalliques utilisés à cet effet sont des composés présentant au moins un groupement organique relié à un atome de métal par une liaison directe carbone-métal.

Les groupements organiques présents dans les dérivés organométalliques sont principalement constitués par des radicaux hydrocarbonés choisis parmi les radicaux alcoyle, alcényle, alcynyle, aryle, aralcoyle, aralcényle, aralcynyle, ou alcoylaryle dans lesquels les fragments aliphatiques sort linéaires, ramifiés ou cycliques et contiennent de 1 à 20 atomes de carbone.

Parmi les métaux présents dans de tels dérivés organométalliques on citera à titre d'exemple, principalement les métaux alcalins, alcalino-terreux les métaux du groupe III tel que l'aluminium, et les métaux de transition, tel que le zinc.

A titre d'exemples particuliers, on mentionnera les organo-alcalins de formule générale IV:

$$R' - Alc \qquad (IV)$$

dans laquelle R' a la signification donnée précédemment et Alc désigne un métal alcalin,

tels que le méthylsodium et le méthyllithium l'éthylsodium et l'éthyilithium, l'isopropylsodium et l'isopmopyllithium, le n-butylsodium et le n-butyllithium, le vinylsodium et le vinyllithium, l'allylsodium et l'allyllithium, l'éthynylsodium et l'éthynyllithium, le propargylsodium et le propargyllithium, le phénylsodium et le phényllithium, le benzylsodium et le benzyllithium;

les halogénures d'organomagnésium de formule générale V:

$$R' - Mg - X \qquad (V)$$

dans laquelle R' a la signification donnée précédemment et X désigne un atome d'halogène,

tels que le bromure de méthylmagnésium, le bromure d'éthylmagnésium, le bromure d'isopropylmagnésium le bromure de tertiobutylmagnésium, le bromure de vinylmagnésium le bromure d'allylmagnésium, le bromure d'hexynylmagnésium, le bromure de phénylmagnésium, le bromure de benzylmagnésium, le bromure de phényléthynylmagnésium; les organozinciques de formule générale VI:

$$R'_2\,Zn \qquad (VI)$$

dans laquelle R' a la signification donnée précédemment, tels que le diéthylzinc;

les organobimagnésiens de formule générale VII:

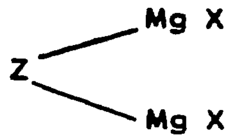

(VII)

dans laquelle Z désigne un radical alcoylène ou alcénylène contenant 3 à 5 atomes de carbone et X désigne un atome d'halogène, tels que le dichlorure de pentyldimagnésium-1,5, le dibromure de pentyldimagnésium-1,5, le dichlorure de buténуl-2(Z)dimagnésium-1,4;

les organo-bialcalins de formule générale VIII:

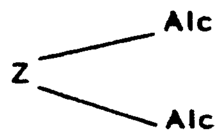

(VIII)

dans laquelle Z désigne un radical alcoylène ou alcénylène contenant 3 à 5 atomes de carbone éventuellement substitué, et Alc désigne un métal alcalin ou alcalino-terreux, tels que

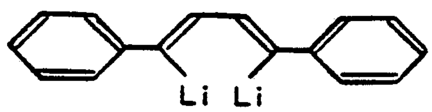

Selon une autre caractéristique de la présente invention, la réaction entre le dérivé organométalique et le complexe de silicium pentacoordiné de formule générale I est conduite par chauffauge au reflux, en milieu solvant anhydre et sous atmosphère inerte, par exemple sous atmosphère d'azote. Le milieu solvant inerte utilisé est avantageusement choisi parmi les éthers aliphatiques, tels que l'éther éthylique, le dioxanne et le tétrahydrofuranne, ou encore parmi les hydrocarbures, tels que par exemple le cyclohexane.

Selon une variante, après avoir effectué la réaction entre le dérivé organométallique et le complexe de formule I, on peut introduire un agent réducteur, en particulier un hydrure minéral tel que l'aluminohydrure de lithium pour obtenir un monohydrogénoorganosilane de formule III, dans laquelle R''' représente un atome d'hydrogène.

Enfin, ladite réaction entre le dérivé organométallique et le complexe de formule I peut être conduite en présence de dichlorure de bis(cyclopentadiényl)titane, pour obtenir soit un dérivé monohydrogénoorganosilane, soit un dérivé dihydrogénoorganosilane dans le cas où le radical R' de l'organométallique est encombré. Le dihydrogénoorganosilane ainsi obtenu peut, à son tour, être mis à réagir avec un second dérivé organométallique, par exemple un halogénure d'alcoylmagnésium, pour fournir un monohydrogénosilane.

On indiquera ci-après à titre d'illustration de l'invention, un certain nombre d'exemples de préparation de complexes de silicium et d'organosilanes obtenus selon diverses variantes.

**Exemple 1**

**Préparation du bis(benzènediolato-1,2)-méthylsilicate de sodium**

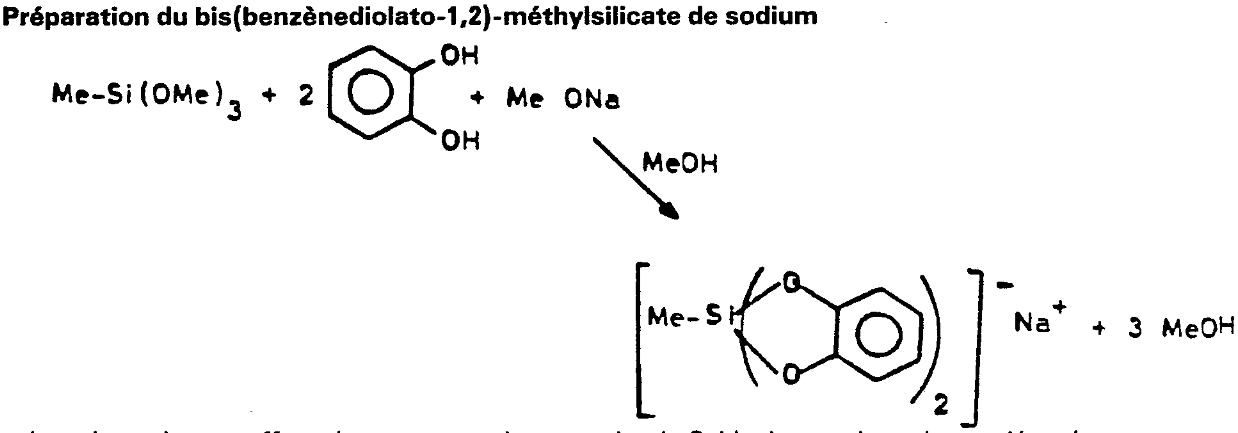


La préparation est effectuée sous azote dans un tube de Schlenk avec des solvants dégazés.

1,09 g de sodium (0,0475 mole) est dissous dans 15 ml de méthanol. 6,47 g de $MeSi(OMe)_3$ (0,0475 mole) dilué dans 10 ml de méthanol sont additionnés rapidement à température ambiante. On ajoute ensuite 10,34 g de pyrocatéchol dissous dans 20 ml de méthanol, goutte à goutte et à température ambiante. Le mélange

réactionnel est chauffé pendant environ 4 heures à 45°C. Le méthanol est chassé sous vide. Le complexe est ensuite lavé 2 fois à l'éther sous azote pour éliminer le pyrocatéchol et $MeSi(OMe)_3$ n'ayant pas réagi. La solution est filtrée sous azote. Le complexe est séché sous vide à 100°C pendant une journée pour éliminer l'éther. On obtient 12 g de complexe (rendement 90 %). Le complexe obtenu sous forme de poudre doit être conservé sous azote. Il est soluble dans le méthanol et le DMSO.

Caractéristiques spectrales: $^{13}C$ RMN ($CD_3OD$) 4 signaux
Reference TMS: $\delta$ = 151,6; 120,8; 113,2; 1,2 ppm $^{29}Si$ RMN ($CD_3OD$) $\delta$ = -73,7 ppm.

**Exemple 2**

**Préparation du bis(benzènediolato-1,2)- méthylsilicate de potassium**

Selon un mode opératoire identique à celui de l'exemple 1, on obtient à partir de méthylate de potassium le complexe stable à l'air de formule:

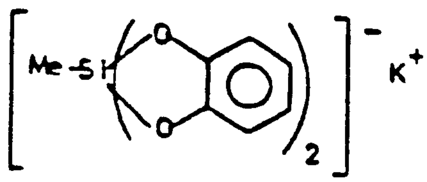

**Exemple 3**

**Préparation du bis(benzènediolato-1,2)-vinylsilicate de potassium**

Selon un mode opératoire identique à celui de l'exempie 1, on obtient à partir de 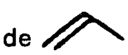 $Si(OMe)_3$ et de MeOK le complexe stable à l'air de formule:

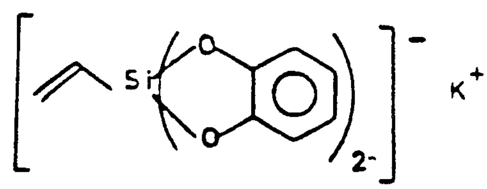

**Exemple 4**

**Préparation du bis(benzènediolato-1,2)-phénylsilicate de sodium**
(Composé en soi connu par FR-A-1 433 678)

Selon un mode opératoire identique à celui de l'exemple 1, on obtient à partir de 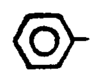 $Si(OMe)_3$ et de MeONa le complexe stable de formule:

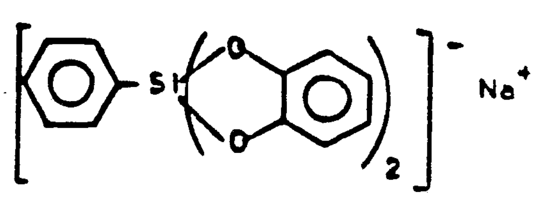

**Exemple 5**

**Préparation du bis(benzènediolato-1,2)-benzylsilicate de sodium**

Selon un mode opératoire identique à celui de l'exemple 1, on obtient à partir de 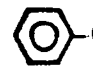-$CH_2$-Si(OMe)$_3$ et de MeONa le complexe stable à l'air de formule:

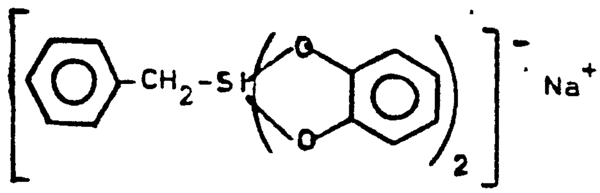

**Exemple 6**

**Préparation du bis(benzènediolato-1,2)(naphtyl-1)-silicate de sodium**

Selon un mode opératoire identique à celui de l'exemple 1, on obtient à partir de

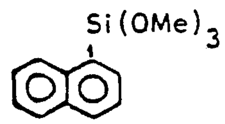

et de MeONa le complexe stable de formule:

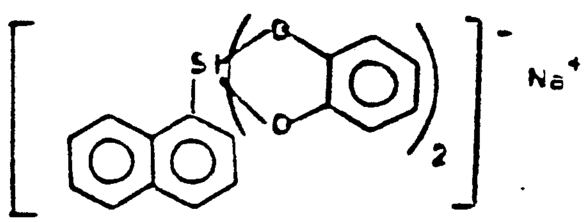

**Exemple 7**

**Préparation d'organosilane mixte de formule**

R-SiR$_3$'

a) <u>Mode opératoire général</u>

Le complexe pentacoordiné de formule I (10 à 20 mmoles) est mis dans un ballon ou un tube de Schlenk en suspension dans l'éther anhydre (50 à 100 ml). 3 équivalents de solution éthérée d'organométallique environ molaire sont ajoutés à température ambiante. Le mélange réactionnel est chauffé au reflux pendant 1 à 2 heures. Le mélange réactionnel est ensuite hydrolysé avec 50 ml d'une solution $H_2SO_4$ 25 %, le dérivé silicié est extrait 3 fois à l'éther. La solution éthérée est lavée une fois avec 25 ml d'eau, 2 fois avec 25 ml de solution de soude 2N, 2 fois avec 25 ml d'eau, une fois avec une solution saturée de chlorure de sodium, et séchée sur sulfate de magnésium. Après évaporation du solvant, le dérivé silicié est purifié par distillation ou recristallisation. Il est caractérisé par les spectres IR, RMN et de masse.

b) <u>Préparation de [tri(n-butyl)]-méthylsilane</u>

Conformément au mode opératoire ci-dessus, à partir de bis(benzènediolato-1,2)-méthylsilicate de sodium et de 3 équivalents de n-butyllithium, on obtient avec un rendement de 43 % l'organosilane de formule:

Me-Si(n-Bu)$_3$ $Eb_{20}$ = 117 - 120°C

c) <u>Préparation de méthyltriphénylsilane</u>

Conformément au mode opératoire ci-dessus, à partir de bis(benzènediolato-1,2)-méthylsilicate de sodium et de 3 équivalents de phényllithium, on obtient avec un rendement de 63 % l'organosilane de formule:

$Me\text{-}Si(Ph)_3$ $Eb_{0,2} = 150 - 160°C$

d) Préparation de triallylméthylsilane

Conformément au mode opératoire ci-dessus, à partir de bis(benzènediolato-1,2)-méthylsilicate de sodium et de 3 équivalents de bromure d'allylmagnésium, on obtient avec un rendement de 62 % l'organosilane de formule:

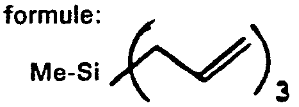

$Eb_{35} = 78 - 82°C$

e) Préparation de méthyltri(phényléthynyl)-silane

Conformément au mode opératoire ci-dessus, à partir de bis(benzènediolato-1,2)-méthylsilicate de sodium et de 3 équivalents de bromure de phényléthynylmagnésium on obtient avec un rendement de 82 % l'organosilane de formule:

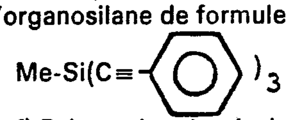

P.F. = 125 - 126°C

f) Préparation de triméthylphénylsilane

Conformément au mode opératoire ci-dessus, à partir de bis(benzènediolato-1,2)-phénylsilicate de sodium et de 3 équivalents de méthyllithium on obtient avec un rendement de 78 % l'organosilane de formule:

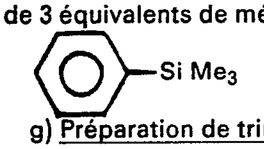

$Eb_{30} = 75 - 77°C$

g) Préparation de tri(n-butyl)phénylsilane

Conformément au mode opératoire ci-dessus, à partir de bis(benzènediolato-1,2)-phénylsilicate de sodium et de 3 équivalents de n-butyllithium, on obtient avec un rendement de 85 % l'organosilane de formule:

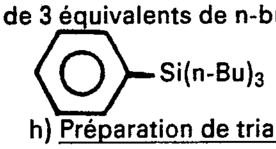

$Eb_{0,05} = 89 - 92°C$

h) Préparation de triallylphénylsilane

Conformément au mode opératoire ci-dessus, à partir de bis(benzènediolato-1,2)-phénylsilicate de sodium et de 3 équivalents de bromure d'allylmagnésium, on obtient avec un rendement de 53 % l'organosilane de formule:

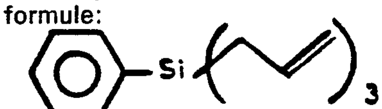

$Eb_{0,4} = 85 - 88°C$

i) Préparation de [tri(hexynyl-1)]phénylsilane

Conformément au mode opératoire ci-dessus, à partir de bis(benzènediolato-1,2)-phénylsilicate de sodium et de 3 équivalents de bromure d'(hexynyl-1)-magnésium, on obtient avec un rendement de 54 % l'organosilane de formule:

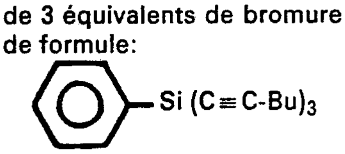

$Eb_1 = 150 - 172°C$

**Exemple 8**

**Préparation d'organosilane monohydrogéné de formule**

$RSiR_2'H$

a) Mode opératoire général

Le complexe pentacoordiné de formule I (10 à 20 mmoles) est mis dans un ballon ou un tube de Schlenk en suspension dans l'éther anhydre (50 à 100 ml). 2 équivalents de solution éthérée d'organométallique environ molaire sont ajoutés à température ambiante. Le mélange réactionnel est chauffé au reflux pendant 1 à 2 heures, puis versé sur une suspension dans l'éther de $LiAlH_4$ en excès (n g) et agité à température ambiante pendant 3 heures. Le mélange réactionnel est ensuite hydrolysé avec n ml d'eau, puis n ml de soude à 15 %,

puis 3.n ml d'eau. Le précipité formé est filtré et lavé à l'éther. Les filtrats sont lavés une fois à l'eau et séchés sur sulfate de magnésium.

Après évaporation du solvant, le dérivé silicié est purifié par distillation ou recristallisation. Il est caractérisé par les spectres IR, RMN et de masse.

b) Préparation de dibenzylméthylsilane

Conformément au mode opératoire ci-dessus, à partir de bis(benzènediolato-1,2)-méthylsilicate de sodium et de 2 équivalents de bromure de benzylmagnésium, on obtient avec un rendement de 86 % l'organosilane de formule:

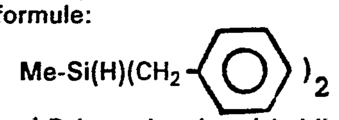

$Eb_{0,05} = 90°C$

c) Préparation de méthyldiphénylsilane

Conformément au mode opératoire ci-dessus, à partir de bis(benzènediolato-1,2)-méthylsilicate de sodium et de 2 équivalents de phényllithium, on obtient avec un rendement de 60 % l'organosilane de formule:

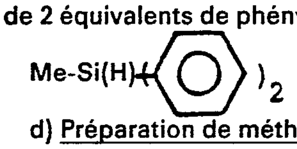

$Eb_1 = 90 - 95°C$

d) Préparation de méthyl-1 diphényl-2,5 silacyclopentadiène

Conformément au mode opératoire ci-dessus, à partir de bis(benzènediolato-1,2)-méthylsilicate de sodium et d'un seul équivalent de

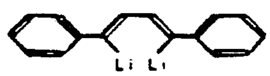

on obtient avec un rendement de 51 % l'organosilane de formule:

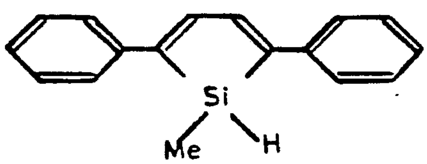

e) Préparation de diméthylphénylsilane

Conformément au mode opératoire ci-dessus, à partir de bis(benzènediolato-1,2)-phénylsilicate de sodium et de 2 équivalents de méthyllithium, on obtient avec un rendement de 40 % l'organosilane de formule:

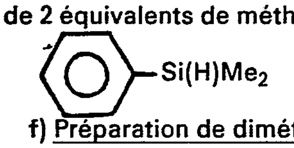

$Eb_{100} = 89 - 91°C$

f) Préparation de diméthylphénylsilane

Conformément au mode opératoire ci-dessus, è partir de bis(benzènediolato-1,2)-phénylsilicate de sodium et de 2 équivalents de bromure de méthylmagnésium, on obtient avec un rendement de 65 % l'organosilane de formule:

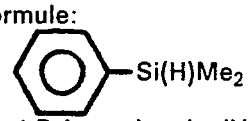

$Eb_{100} = 90 - 92°C$

g) Préparation de diéthylphénylsilane

Conformément au mode opératoire ci-dessus, à partir de bis(benzènediolato-1,2)-phénylsilicate de sodium et de 2 équivalents de bromure d'éthylmagnésium, on obtient avec un rendement de 40 % l'organosilane de formule:

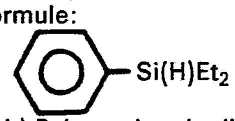

$Eb_{25} = 100 - 105°C$

h) Préparation de di(n-butyl)phénylsilane

Conformément au mode opératoire ci-dessus, à partir de bis(benzènediolato-1,2)-phénylsilicate de sodium et de 2 équivalents de n-butyllithium, on obtient avec un rendement de 57 % l'organosilane de formule:

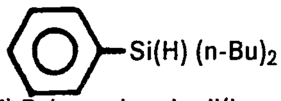

$Eb_{0,5} = 75 - 79°C$

i) Préparation de di(isopropyl)-phénylsilane

Conformément au mode opératoire ci-dessus, à partir de bis(benzènediolato-1,2)-phénylsilicate de sodium et de 2 équivalents de bromure d'isopropylmagnésium, on obtient avec un rendement de 45 % l'organosilane de formule:

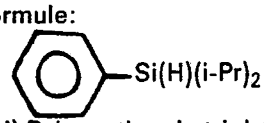

$Eb_{17} = 110 - 115°C$

j) Préparation de triphényl-1,2,5 silacyclopentadiène

Conformément au mode opératoire ci-dessus à partir de bis(benzènediolato-1,2)-phénylsilicate de sodium et d'un seul équivalent de

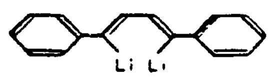

on obtient avec un rendement de 40 % l'organosilane de formule:

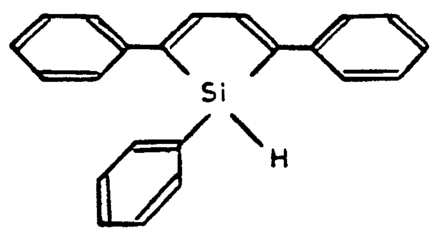

P.F.=176-178°C

**Exemple 9**

**Préparation de dihydrogénosilanes**

20 mmoles de bis(benzènediolato-1,2)-phénylsilicate de sodium et 0,251 g de dichlorure de bis(cyclopentadienyl)-titane (1 mmole) sont mis en suspension dans 60 ml d'éther anhydre sous atmosphère d'argon. 1 équivalent de solution éthérée de bromure de tert-butylmagnésium est ajouté goutte à goutte à température ambiante. Le mélange réactionnel est ensuite porté au reflux pendant environ 5 heures. On hydrolyse avec HCl 4N. On extrait 3 fois la phase aqueuse à l'éther. La phase organique est lavée à la soude puis à l'eau jusqu'à neutralité, et ensuite on sèche sur $MgSO_4$. On obtient ainsi à la distillation, avec un rendement de 50 %, le dihydrogénosilane de formule:

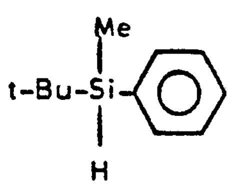

$Eb_{23} = 80 - 85°C$

Par réaction ultérieure avec un organométallique différent, par exemple le bromure de méthylmagnésium, on obtient un monohydrogénosilane de formule:

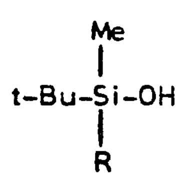

Par hydroxylation, ce type de dérivés monohydrogénés conduit à la formation de silanols de formule générale:

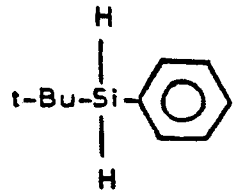

$Eb_{23}$=80-85°C

utiles en tant que médicaments ou comme intermédiaires de synthèse de médicaments.

## Revendications

1. Complexes de silicium pentacoordinés caractérisés en ce qu'ils répondent à la formule générale I:

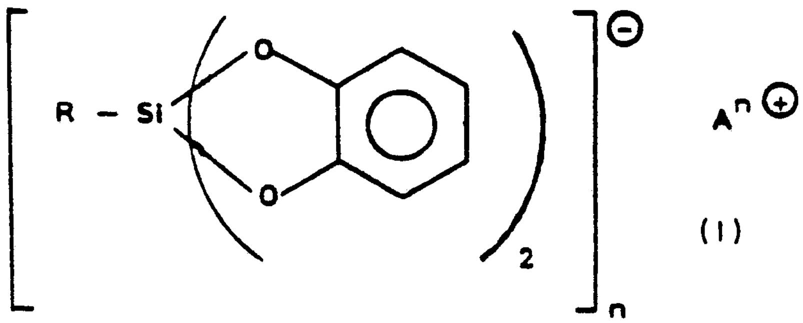

(I)

dans laquelle:

R désigne un radical alcoyle, alcényle, alcynyle, phényle, naphtyle, phenylalcoyle, naphtylalcoyle, phénylalcényle, naphtylalcényle, phenylalcynyle, naphtylalcynyle, alcoylphényle ou alcoylnaphtyle, dans lesquels les fragments aliphatiques sont linéaires ou ramifiés et contiennent de 1 à 20 atomes de carbone,

A represente un metal alcalin ou alcalino-terreux, à la condition toutefois que A ne représente pas le sodium, le potassium, le baryum, le rubidium ou le magnésium, lorsque R est un radical phényle, et

n = 1 ou 2.

2. Procédé pour la préparation de complexes de formule générale I, selon la revendication 1, caractérisé en ce que l'on fait réagir un dérivé de silicium de formule générale II:

R - Si Y (II)

dans laquelle:

R a la signification donnée à la revendication 1, et

Y représente un groupement trialcoxy en $C_1$ à $C_6$, trihalogéno, dialcoxyhydrogéno en $C_1$ à $C_6$ ou dihalogénohydrogéno,

avec du pyrocatechol en présence d'une base constituée par un alcoolate de métal alcalin ou alcalino-terreux, notamment préparé in situ dans le milieu réactionnel.

3. Procédé selon la revendication 2, caractérisé en ce que la réaction est conduite en milieu solvant anhydre, notamment en milieu alcoolique, et sous atmosphère inerte.

4. Application des complexes de formule générale I:

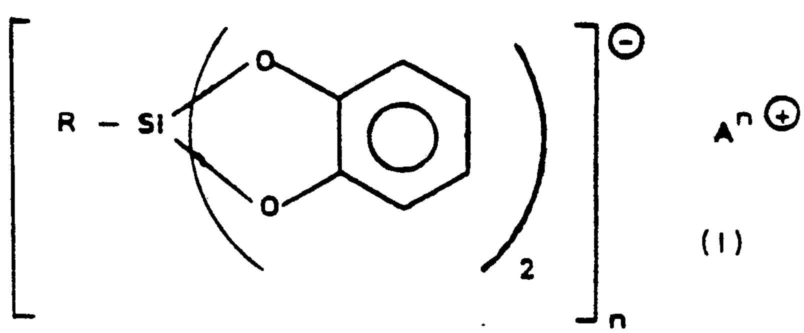

(I)

dans laquelle:

R désigne un radical alcoyle, alcényle, alcynyle, phényle, naphtyle, phénylalcoyle, naphtylalcoyle, phénylalcényle, naphtylalcenyle, phénylalcynyle, naphtylalcynyle, alcoylphényle ou alcoylnaphtyle, dans lesquels les fragments aliphatiques sont linéaires ou ramifiés et contiennent de 1 à 20 atomes de carbone,

A représente un métal alcalin ou alcalino-terreux, et

n = 1 ou 2,

à la préparation d'organosilanes de formule III:

R R' R'' Si R''' (III)

dans laquelle:
R a la signification donnée précédemment,
R' désigne un radical R,
R'' et R''' désignent un atome d'hydrogène ou un radical R,
R' et R'' pouvant en outre former un cycle avec l'atome de silicium,
caractérisée en ce que l'on fait réagir un dérivé organométallique, susceptible de générer les radicaux R', R'' et R''' dans la mesure où ils ne sont pas de l'hydrogène, avec le complexe de formule générale I précité.

5. Application selon la revendication 4, caractérisée en ce que le dérivé organométallique est un organoalcalin de formule générale IV:

R' - Alc (IV)

dans laquelle:
R' a la signification donnée à la revendication 4, et
Alc désigne un métal alcalin.

6. Application selon la revendication 4, caractérisée en ce que le dérivé organométallique est un halogénure d'organomagnésium de formule générale V:

R' - Mg - X (V)

dans laquelle:
R' a la signification donnée à la revendication 4, et
X désigne un atome d'halogène.

7. Application selon la revendication 4, caractérisée en ce que le dérivé organométallique est un organozincique de formule générale VI:

$R'_2 Zn$ (VI)

dans laquelle:
R' a la signification donnée à la revendication 4.

8. Application selon la revendication 4, caractérisée en ce que le dérivé organométallique est un organobimagnésien de formule générale VII:

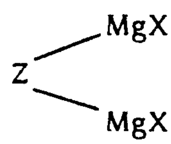
(VII)

dans laquelle:
Z désigne un radical alcoylène ou alcénylène contenant 3 à 5 atomes de carbone, et
X désigne un atome d'halogène.

9. Application selon la revendication 4, caractérisée en ce que le dérivé organométallique est un organobialcalin de formule générale VIII:

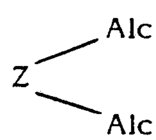
(VIII)

dans laquelle:
Z désigne un radical alcoylène ou alcénylène contenant 3 à 5 atomes de carbone, éventuellement substitué, et
Alc désigne un métal alcalin.

10. Application selon l'une des revendications 4 à 9, caractérisée en ce que la réaction est conduite par chauffage au reflux, en milieu solvant anhydre et sous atmosphère inerte.

11. Application selon l'une des revendications 4 à 10, caractérisée en ce que, après réaction de l'organométallique, un agent réducteur est ajouté au milieu, en particulier un hydrure minéral tel que l'aluminohydrure de lithium, pour obtenir un monohydrogénoorganosilane de formule III, dans laquelle R''' représente un atome d'hydrogène.

12. Application selon l'une des revendications 4 à 10, caractérisée en ce que la réaction est conduite avec un dérivé organométallique, en présence de dichlorure de bis(cyclopentadienyl)-titane pour obtenir un hydrogénoorganosilane.

**Claims**

1. Pentacoordinated silicon complexes, characterised in that they satisfy the general formula I:

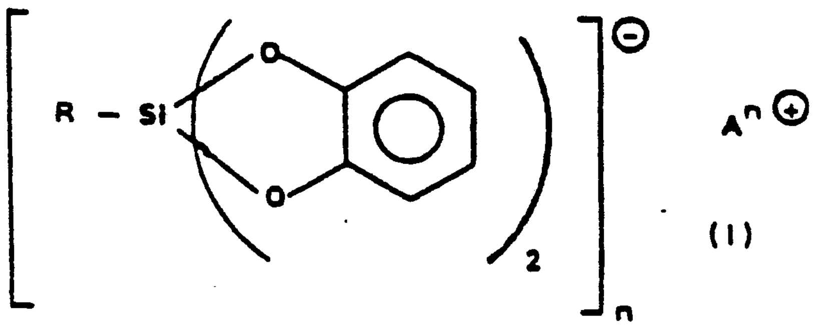

(I)

wherein:
R denotes an alkyl, alkenyl, alkynyl, phenyl, naphthyl, phenylalkyl, naphthylalkyl, phenylalkenyl, naphthylalkenyl, phenylalkynyl, naphthylalkynyl, alkylphenyl or alkylnaphthyl radical in which the aliphatic fragments are linear or branched and contain from 1 to 20 carbon atoms,
A denotes an alkali metal or an alkaline-earth metal, provided however that A does not represent sodium, potassium, barium, rubidium or magnesium when R is a phenyl radical, and
n = 1 or 2.

2. Process for the preparation of complexes of the general formula I, according to claim 1, characterised in that a silicon derivative of the general formula II:

R-SiY (II)

wherein:

R has the meaning given in claim 1 and
Y denotes a $C_1$ to $C_6$ trialkoxy, trihalogeno, $C_1$ to $C_6$ dialkoxyhydrogeno or dihalogenohydrogeno group
is reacted with pyrocatechol in the presence of a base comprising an alcoholate of an alkali metal or alkaline-earth metal, prepared more particularly in situ in the reaction medium.

3. A process according to claim 2, characterised in that the reaction is carried out in an anhydrous solvent medium, more particularly in an alcoholic medium, and in an inert atmosphere.

4. Application of complexes of the general formula I:

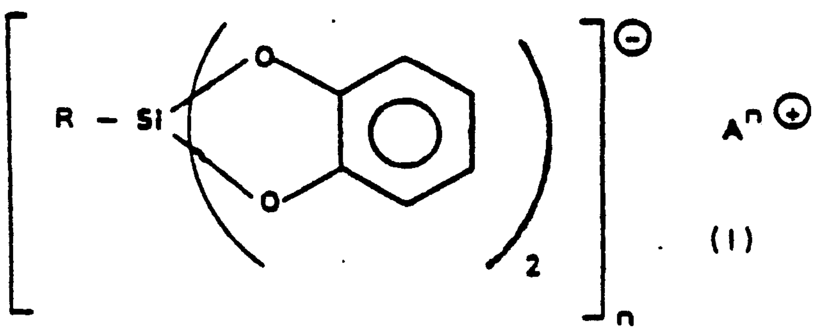

(I)

wherein:

R denotes an alkyl, alkenyl, alkynyl, phenyl, naphthyl, phenylalkyl, naphthylalkyl, phenylalkenyl, naphthylalkenyl, phenylalkynyl, naphthylalkynyl, alkylphenyl or alkylnaphthyl radical in which the aliphatic fragments are linear or branched and contain from 1 to 20 carbon atoms.
A denotes an alkali metal or an alkaline-earth metal and
n = 1 or 2
to the preparation of organosilanes of formula III

R R′ R″ Si R‴ (III)

wherein:

R has the meaning given previously,
R' denotes a radical R,
R'' and R''' denote a hydrogen atom or a radical R,
R' and R'' may also form a cycle with the silicon atom
characterised in that an organometallic derivative adapted to generate the radicals R', R'' and R''' provided that they are not hydrogen is reacted with the complex of the general formula aforesaid.

5. Application according to claim 4, characterised in that the organometallic derivative is an organo-alkali metal of the general formula IV:

R' - Alc (IV)

wherein:

R' has the meaning given in claim 4 and
Alc denotes an alkali metal.

6. Application according to claim 4, characterised in that the organometallic derivative is a organomagnesium halide of the general formula V:

R' - Mg - X (V)

wherein:

R' has the meaning given in claim 4 and
X denotes a halogen atom.

7. Application according to claim 4, characterised in that the organometallic derivative is an organozinc of the general formula VI:

$R'_2 Zn$ (VI)

wherein:

R' has the meaning given in claim 4.

8. Application according to claim 4, characterised in that the organometallic derivative is an organodimagnesium of the general formula VII:

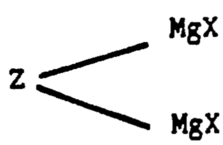

(VII)

wherein:

Z denotes an alkylene or alkenylene radical containing 3 to 5 carbon atoms and
X denotes a halogen atom.

9. Application according to claim 4, characterised in that the organometallic derivative is an organo-dialkali metal of the general formula VIII:

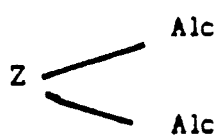

(VIII)

wherein:

Z denotes an alkylene or alkenylene radical containing 3 to 5 carbon atoms which may or may not be substituted and
Alc denotes an alkali metal.

10. Application according to any one of claims 4 to 9, characterised in that the reaction is carried out by heating with reflux in an anhydrous solvent medium and in an inert atmosphere.

11. Application according to any one of claims 4 to 10, characterised in that after reaction of the organometal a reducing agent is added to the medium, more particularly a mineral hydride such as lithium aluminohydride, to obtain a monohydrogenoorganosilane of the formula III wherein R''' denotes a hydrogen atom.

12. Application according to any one of claims 4 to 10, characterised in that the reaction is carried out with an organometallic derivative in the presence of bis (cyclopentadienyl)-titanium dichloride to obtain a hydrogenoorganosilane.

**Patentansprüche**

1. Pentakoordinierte Siliciumkomplexe, dadurch gekennzeichnet, daß sie der allgemeinen Formel I entsprechen:

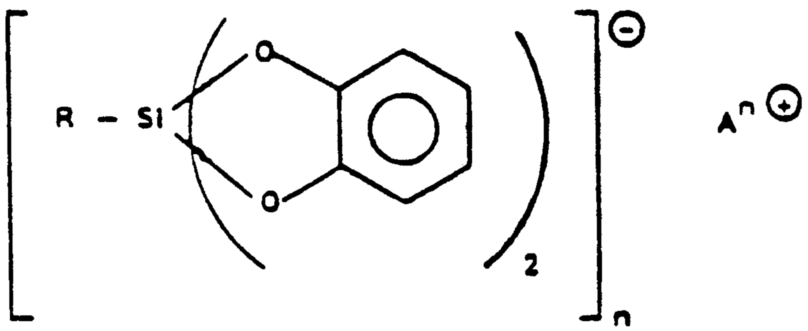

(I)

worin:

R einen Alkyl-, Alkenyl-, Alkinyl-, Phenyl-, Naphthyl-, Phenylalkyl-, Naphthylalkyl-, Phenylalkenyl-, Naphthylalkenyl-, Phenylalkinyl-, Naphthylalkinyl-, Alkylphenyl- oder Alkylnaphthylrest bedeutet, worin die aliphatischen Reste geradkettig oder verzweigt sind und 1 bis 20 Kohlenstoffatome enthalten,
A ein Alkali- oder Erdalkalimetall bedeutet, unter der Bedingung, daß A nicht Natrium, Kalium, Barium, Rubidium oder Magnesium ist, wenn R ein Phenylrest ist, und
n = 1 oder 2 ist.

2. Verfahren zur Herstellung der Komplexe der allgemeinen Formel I nach Anspruch 1, dadurch gekennzeichnet, daß man ein Siliciumderivat der allgemeinen Formel II:

R - Si Y (II)

worin:
R die in Anspruch 1 gegebene Bedeutung hat, und
Y eine Gruppe von Trialkoxy mit $C_1$ bis $C_6$, Trihalogen, Dialkoxywasserstoff mit $C_1$ bis $C_6$ oder Dihalogenwasserstoff bedeutet,
mit Brenzcatechin in Gegenwart einer Base, die durch ein Alkalimetall- oder Erdalkalimetallalkoholat gebildet wird, bevorzugt hergestellt in situ im Reaktionsmedium, reagieren läßt.

3. Verfahren nach Anspruch 2, dadurch gekennzeichnet, daß die Reaktion in einem wasserfreien Lösungsmittelmilieu durchgeführt wird, bevorzugt in einem alkoholischen Medium, und unter einer inerten Atmosphäre.

4. Verwendung der Komplexe der allgemeinen Formel I:

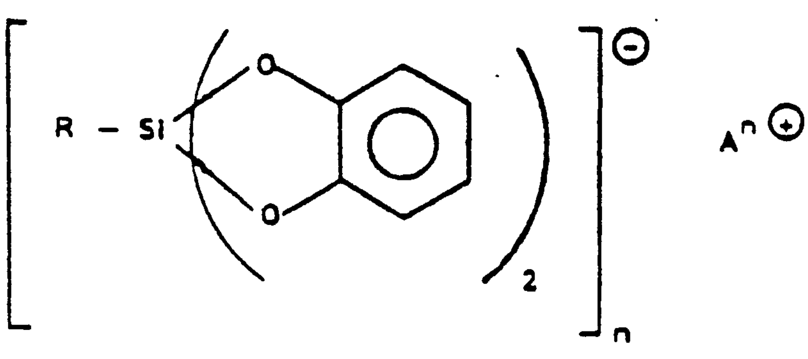

(I)

worin:

R einen Alkyl-, Alkenyl-, Alkinyl-, Phenyl-, Naphthyl-, Phenylalkyl-, Naphthylalkyl-, Phenylalkenyl-, Naphthylalkenyl-, Phenylalkinyl-, Naphthylalkinyl-, Alkylphenyl- oder Alkylnaphthylrest bedeutet, worin die aliphatischen Reste geradkettig oder verzweigt sind und 1 bis 20 Kohlenstoffatome enthalten,
A ein Alkalimetall oder Erdalkalimetall bedeutet, und
n = 1 oder 2 ist,
zur Herstellung von Organosilanen der Formel III:

R R' R'' Si R''' (III)

worin:

R die zuvor genannte Bedeutung hat,
R' einen Rest R bedeutet,
R'' und R''' ein Wasserstoffatom oder einen Rest R bedeuten,
R' und R'' außerdem einen Ring mit dem Siliciumatom bilden können,
dadurch gekennzeichnet, daß man ein Organometallderivat, das in der Lage ist, die Reste R', R'' und R''' im Verfahren zu bilden, wobei sie nicht Wasserstoff sind, mit dem Komplex mit der zuvor genannten Formel I reagieren läßt.

5. Verwendung nach Anspruch 4, dadurch gekennzeichnet, daß das Organometallderivat eine Organoalkaliverbindung der allgemeinen Formel IV ist:

$$R' - Alc \qquad (IV)$$

worin:

R' die in Anspruch 4 angegebene Bedeutung hat, und
Alc ein Alkalimetall bedeutet.

6. Verwendung nach Anspruch 4, dadurch gekennzeichnet, daß das Organometallderivat ein Organomagnesiumhalogenid der allgemeinen Formel V ist:

$$R' - Mg - X \qquad (V)$$

worin:

R' die in Anspruch 4 angegebene Bedeutung hat, und
X ein Halogenatom bedeutet.

7. Verwendung nach Anspruch 4, dadurch gekennzeichnet, daß das Organometallderivat ein Organozinkderivat der allgemeinen Formel VI ist:

$$R'_2 Zn \qquad (VI)$$

worin:

R' die in Anspruch 4 angegebene Bedeutung hat.

8. Verwendung nach Anspruch 4, dadurch gekennzeichnet, daß das Organometallderivat ein Organobimagnesiumderivat der allgemeinen Formel VII ist:

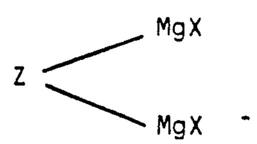
(VII)

worin:

Z ein Alkylen- oder Alkenylenrest mit 3 bis 5 Kohlenstoffatomen ist, und
X ein Halogenatom bedeutet.

9. Verwendung nach Anspruch 4, dadurch gekennzeichnet, daß das Organometallderivat eine Organobialkaliderivat der allgemeinen Formel VIII bedeutet:

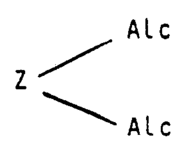
(VIII)

worin:

Z einen Alkylenrest oder Alkenylenrest mit 3 bis 5 Kohlenstoffatomen, gegebenenfalls substituiert, bedeutet und
Alc ein Alkalimetall bedeutet.

10. Verwendung nach einem der Ansprüche 4 bis 9, dadurch gekennzeichnet, daß die Reaktion durch Erhitzen unter Rückfluß durchgeführt wird, in einem wasserfreien Lösungsmittelmilieu und unter einer inerten Atmosphäre.

11. Verwendung nach einem der Ansprüche 4 bis 10, dadurch gekennzeichnet, daß nach der Reaktion der Organometallverbindung ein Reduktionsmittel dem Medium zugefügt wird, insbesondere ein anorganisches

Hydrid wie Lithiumaluminiumhydrid, wobei man eine Monowasserstofforganosilanverbindung der allgemeinen Formel III erhält, worin R''' ein Wasserstoffatom bedeutet.

12. Verwendung nach einem der Ansprüche 4 bis 10, dadurch gekennzeichnet, daß die Reaktion durchgeführt wird mit einem Organometallderivat, in Gegenwart von Bis(Cyclopentadienyl)-titandichlorid, wobei man ein Wasserstofforganosilan erhält.